# EUROPEAN PATENT SPECIFICATION

(11) **EP 4 023 901 B1**
(45) Date of publication and mention of the grant of the patent: **06.08.2025**
(21) Application number: 20856267.8
(22) Date of filing: 24.08.2020
(51) Int. Cl.: F16D 51/10, F16D 51/18, F16D 51/20, F16D 51/22

(54) **BRAKING SYSTEM FOR A VEHICLE AND VEHICLE FOR TRANSPORTING LOADS AND/OR PASSENGERS**
BREMSSYSTEM FÜR EIN FAHRZEUG UND FAHRZEUG ZUM TRANSPORT VON LASTEN UND/ODER PASSAGIEREN
SYSTÈME DE FREINAGE POUR UN VÉHICULE ET VÉHICULE POUR LE TRANSPORT DE CHARGES ET/OU DE PASSAGERS

(30) Priority: 30.08.2019 BR 102019018156
(43) Date of publication of application: 06.07.2022
(73) Proprietor: IVECO S.P.A., 10156 Torino (IT)
(72) Inventor: PEREIRA DE LEMOS, José Francivaldo, 35700-187 Sete Lagoas (BR)
(74) Representative: Studio Torta S.p.A.
(86) International application number: PCT/BR2020/050335
(87) International publication number: WO 2021/035321

(56) References cited:
- WO-A1-2018/107256
- GB-A- 191 015 412
- GB-A- 191 015 412
- GB-A- 221 635
- GB-A- 221 635
- US-A- 1 735 507
- US-A- 5 310 028
- US-A1- 2016 121 857
- US-A1- 2016 121 857
- US-A1- 2016 123 414

## Description

### Field of the Invention

The present invention relates, in general, to a novel braking system for vehicles, such as those suitable for transporting loads and/or passengers, that is made up of technical, constructive and functional characteristics designed and developed to improve the working conditions of drivers in traffic, but mainly to increase the efficiency, safety and service life of the braking system. The present invention also relates to vehicles, particularly those suitable for transporting loads and/or passengers.

### Fundamentals of the Invention

According to the prior art, and as is generally known by those skilled in the art, there are already several models of braking systems that are used in practically all vehicles. These systems normally comprise mechanisms designed to generate friction with the moving parts of the wheels in order to decelerate and stop the vehicle. A model commonly used in the prior art, and also known in the market as drum brakes, basically consists of the arrangement of a mechanism fixed to the axle of the vehicle that has shoes connected by return elements that support the brake lining and are driven by an actuator assembly, which pushes said shoes against the drum that, in turn, is fixed to the wheel hub of the vehicle and, thus, it is possible to generate friction causing the deceleration of the wheel.

In this sense, it is observed that the most traditional and common models of drum braking systems for vehicles are used, according to the state of the art, whose simple construction and functionality could be improved. More particularly, in these models the shoes are actuated by means of only one actuator positioned at one end, while the opposite end is merely pivoted to assist the angular movement of the shoes to enter into contact with the drum that is associated with the wheel hub. In these cases, as it can be observed by those skilled in the art, despite the simplicity, this solution reveals some limitations related to efficiency and safety, because the contact area of the shoes with the drum becomes somewhat irregular considering that the actuators are positioned only at one end, besides providing a reduced contact area, consequently affecting braking efficiency and causing disordered, unbalanced and even premature wear of some components of said braking system.

In view of these drawbacks, another model of drum braking system has been developed with dual actuation, i.e., in this solution proposed by the prior art, these shoes are driven at both ends, making the contact between the shoes and drum more uniform, in order to try to increase the braking efficiency and the service life of the components of these prior art systems. However, to obtain this drive at both ends, it was considered necessary to add a series of components, such as, for example, complementary actuators for the drive assembly, to restructure the braking system, as well as the actuator system, whether hydraulic, pneumatic or electric, substantially increasing the cost of assembling the braking systems, and the vehicles themselves.

Additionally, in an attempt to simplify and reduce the costs involved in the assembly of these braking systems with dual actuation, there are some solutions that require transmission elements that take up significant space inside the system and may even require other complementary adaptations in the structure and assembly to accommodate said elements, for example, changing the wheel hub, the drum itself and, consequently, the vehicle characteristics and specifications.

Therefore, although the known solutions in the state of the art address some needs, it is observed that the drum braking systems, in particular, consist of relatively complex and/or inefficient structural and constructive arrangements that require restructuring the mechanisms, raising the production and assembly costs of these braking systems.

Examples of such known solutions are disclosed in publications GB15412 A, GB221635 A, US2016121857 A1 or US1735507 A.

Thus, considering the above, it is possible to state that the braking systems for vehicles transporting loads and/or passengers available and known in the prior art lack solutions that are effectively simple, but mainly efficient, safe and capable of reducing the costs involved with the manufacture and assembly of the vehicles. These are, therefore, the objectives for the development of the present invention.

### Description of the Invention

Given the above scenario, it is one of the objectives of the present invention to provide a new braking system for vehicles, which is specially designed and developed to obtain a practical and functional solution to the problems, limitations and drawbacks generated by the braking systems known in the prior art, as exemplified above.

More particularly, one objective of the present invention is to provide a braking system for vehicles comprising innovative technical, constructive and functional features capable of reducing the complexity of the construction of said systems, particularly of those having double-shoe actuating mechanisms, and thus reducing the costs involved with the manufacture and assembly thereof, as well as of the vehicles themselves.

Another objective of the present invention is to provide a vehicle for transporting loads and/or passengers that comprises a braking system, as mentioned above.

Thus, in order to achieve the objectives and technical and functional effects indicated above, among others, the present invention relates to a braking system for a vehicle and a vehicle as claimed in the appended set of claims.

Buses, van, conventional small or large passenger vehicle or motorcycle.

### Brief Description of the Drawings

The characteristics, advantages and technical effects of the present invention, as indicated above, will be more adequately understood by a person skilled in the art from the following detailed description, merely by way of non-limiting example, of possible embodiments, and with reference to the attached schematic figures, namely:
- Figure 1 shows a schematic side view of an example vehicle, such as a commercial van for the transport of loads and/or passengers; and

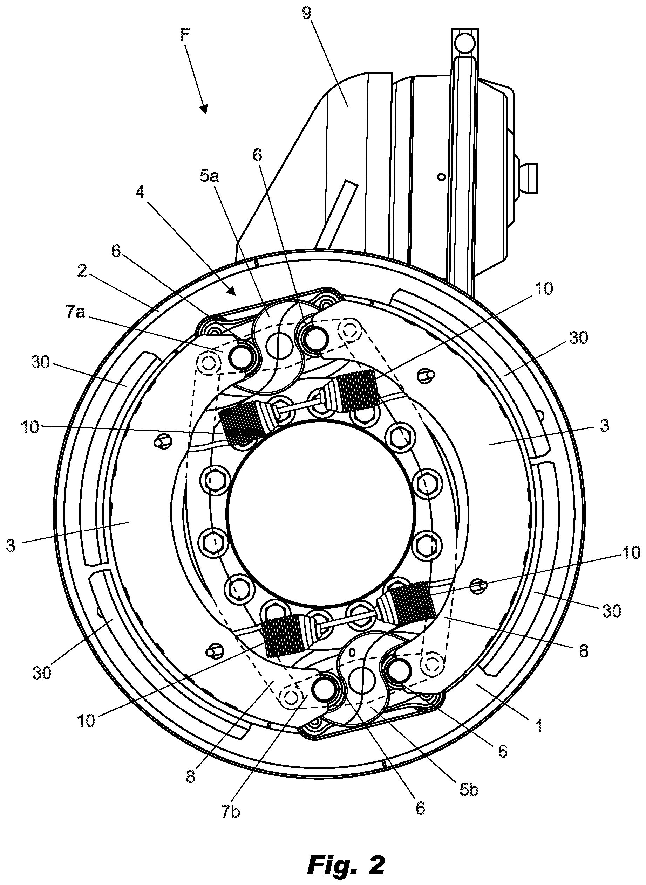

- Figure 2 shows a schematic side view of the braking system for vehicles according to the present invention.

### Description of Embodiments of the Invention

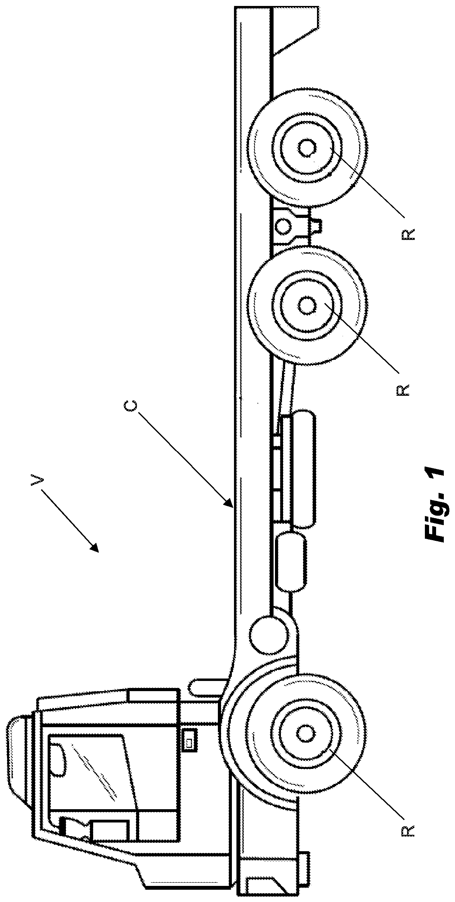

The invention is now described with respect to its particular embodiments by referring to the attached figures showing examples thereof. Such figures are schematic, and their dimensions and/or proportions may not correspond to reality, since they are intended to describe the invention in a didactic manner. The reference numbers indicated in said figures may be repeated across the different figures to indicate equal or similar technical characteristics. Furthermore, the terms eventually used herein such as: above, below, superior, inferior, lateral, right, left, frontal, posterior and its variants should be interpreted according to the guidelines given in Figure 1.

Merely by way of example, and for a better understanding of the present invention, Figure 1 shows a vehicle (V), such as those used for transporting loads and/or passengers. It should be noted that although Figure 1 shows a van, to be appreciated by those skilled in the art, the new braking system, which is the subject of the present invention, may be applied in any type of vehicle, such as a truck, bus, small or large passenger vehicle and even motorcycle, provided that such vehicles use drum-type braking systems. In this context, the vehicle (V) may consist of at least one main drive assembly (T) comprising a combustion, electric or even hybrid engine as a power source, a gearbox that may be connected to a drive shaft which, in turn, is linked to a differential that transfers energy and power to the wheel assemblies supporting the respective wheel hubs (R). As shall be appreciated by those skilled in the art, each wheel assembly of said vehicle (V) with its respective wheel hub (R) may comprise a braking system (F), such as the subject of the present invention.

Thus, only as an example, and without limitations, this vehicle (V) may be a model known in the prior art, such as those manufactured and marketed by CNH Industrial N.V.

In this context, according to the scope of the present invention, the braking system (F) basically consists of a frame 1 that is fixed at the end of the rigid axle and on which a drum 2 is concentrically placed, which is associated with the wheel hub (R). Said frame 1, also known as a mirror or brake plate, is responsible for supporting shoes 3 provided with brake linings 30 which are arranged on portions of diametrically opposite edges of said frame 1, said shoes 3 moving towards the inner surface of said drum 2 by means of a drive assembly 4.

Said drive assembly 4 according to the present invention comprises two actuators, a first actuator 5a positioned adjacent to one end of said shoes 3, and a second actuator 5b positioned adjacent to the opposite end of said shoes 3, wherein the ends of said shoes 3 are in contact with said respective actuators 5a, 5b through interaction elements 6. Also, each of said actuators 5a, 5b is mounted concentrically with respective supports 7a, 7b, which are interconnected by means of rods 8 arranged at their ends so as to provide a coordinated and uniform movement of said shoes 3 with their respective brake linings 30. Also, according to the present invention, at least one of said actuators 5a, 5b is mechanically coupled to an actuator assembly 9 which is driven according to the demand of the driver of the vehicle (V), for example via the brake pedal or lever.

According to a particular embodiment of the present invention, said shoes 3 are interconnected by means of return elements 10, such as for example coil springs, the purpose of which is to provide for and facilitate the repositioning of the shoes 3 when the drive assembly 4 is not actuated, and thereby to release the movement of said drum 2 together with the wheel hub.

Additionally, according to one embodiment of the present invention, said actuators 5a, 5b comprise an **"S"** cam configuration, such that said interaction elements 6 slide over the surface of said "S"-shaped cam to thereby promote displacement of said shoes 3. As may be appreciated by those skilled in the art, considering the **"S"** silhouette of the cam, as the interaction elements 6 move on the actuators 5a, 5b, the shoes 3 move away from or towards the centre of the frame 1, making or preventing contact of said brake linings 30 with the inner surface of said drum 2.

As should be appreciated by those skilled in the art, other cam configurations for the actuators 5a, 5b can be easily implemented according to the teachings of the present invention. By way of example, said actuators may comprise an elliptical cam configuration, or any other equivalent and presenting a shape capable of transferring the movement of the actuator assembly 9 in a coordinated manner so that said shoes 3 move towards the inner surface of the drum 2.

As a further embodiment of the present invention, said interaction elements 6 are, for example, rolling supports or merely bearings capable of promoting a sliding and smooth contact on the surface of the actuators 5a, 5b, that is, such an arrangement facilitates the interaction between the shoes 3 and the respective actuators 5a, 5b, thus reducing any friction that may exist between said actuators and said shoes.

Additionally, as should be known to those skilled in the art, the actuator assembly 9 used in the braking system (F), according to the present invention, may be hydraulic, electric, pneumatic or a combination of these technologies. This is because it is known that the vehicles may comprise different actuator assemblies, since it directly depends on the configurations and characteristics of each vehicle, for example, trucks and buses often use pneumatic braking mechanisms, whereas conventional vehicles normally comprise hydraulic mechanisms, as well as tractors and other machines that usually carry a hydraulic oil pressurization system for the actuation of various devices and mechanisms. And nowadays, there are many models that also use electrical components as actuators for their braking systems. As should be noted, regardless of the type of the actuator assembly 9, what is relevant is that it is able to move one of said actuators 5a, 5b and, as a consequence of the construction and assembly of the present system, to move the other actuator through the interconnection obtained by the rods 8.

Thus, as can be seen, the braking system for vehicles, the subject of the present invention, comprises a drive assembly 4 consisting of innovative technical and constructive characteristics and capable of promoting the coordinated and uniform displacement of the shoes 3 and, consequently, causing the solid contact of the brake linings 30 with the inner surface of the drum 2 to, in this way, obtain the safest braking, in addition to the comfort and precision of the driver at the time of braking the vehicle. It should be noted that the drive assembly 4, according to the present invention, does not require substantial adaptations in the structure of the braking system **(F)** and, in this way, the reduction of costs in relation to the manufacture, assembly and maintenance of the braking systems becomes clear. The system is also able to obtain a more uniform wear of the brake linings 30, which causes their service life to increase significantly.

Thus, in summary, it can be stated that the new braking system **(F),** , according to the present invention and detailed above, simplifies the process of construction and assembly of braking systems comprising a dual drive configuration, thus enabling significant reductions to be obtained in the costs involved in the production of these systems and also of vehicles in general.

Additionally, as commented above, the present invention deals with a vehicle for transporting loads and/or passengers (V), comprising a main drive assembly (T) consisting of a combustion, electric or even hybrid engine as a power source, a gearbox that is connected in some way to at least one axle capable of transferring energy and power to at least one wheel assembly equipped with a wheel hub (R), where a braking system is mounted on at least one of said wheel assemblies **(F),** , according to the above embodiments.

More particularly, according to possible embodiments of the present invention, the vehicle for transporting loads and/or passengers (V) may be a truck, bus, van, or even conventional small or large passenger vehicle, including a motorcycle.

Finally, in view of all the above, it is important to be clear that the present description has as its only objective to present and define, in an exemplifying manner, embodiments of the braking system for vehicles for transporting loads and/or passengers, according to the present invention. Therefore, as the persons skilled in the art should understand, several modifications are possible without, therefore, departing from the scope of protection defined by the attached claims.

## Claims

1. A braking system for a vehicle, said braking system comprising a frame (1) fixed to the rigid axle of the vehicle (V), and which is superimposed by a drum (2), which is connected to the wheel hub (R), wherein at least two shoes (3) provided with brake linings (30) are arranged at diametrically opposite edges of said frame (1) and move towards the inner surface of said drum (2) by means of a drive assembly (4), wherein the system is **characterised by** the fact that said drive assembly (4) comprises:
a first actuator (5a) positioned adjacent to one end of said shoes (3), and a second actuator (5b) positioned adjacent to the opposite end of said shoes (3), at least one of which is coupled to an actuator assembly (9) of the vehicle (V); and
**characterized by** comprising supports (7a, 7b) mounted concentrically with the respective actuators (5a, 5b), said supports (7a, 7b) being interconnected by means of rods (8) arranged at their ends.

2. The system, according to claim 1, **characterised in that** said shoes (3) are interconnected by means of return elements (10).

3. The system, according to claim 1, **characterised in that** said actuators (5a, 5b) comprise an "S" or elliptical cam configuration.

4. The system, according to claim 1, **characterised in that** said shoes (3) comprise interaction elements (6) at their ends which are in contact with the respective actuators (5a, 5b).

5. The system, according to claim 1, **characterised in that** said interaction elements (6) are rolling supports or bearings which are in sliding contact? on the surface of said actuators (5a, 5b).

6. The system, according to claim 1, **characterised in that** said actuator assembly (9) is hydraulic, electric, pneumatic or a combination of these technologies.

7. A vehicle for transporting loads and/or passengers that comprises a main drive assembly (T) consisting of a combustion, electric or even hybrid engine as a power source, a gearbox which is connected to at least one axle capable of transferring energy and power to at least one drive assembly with a (R), said vehicle (V) **characterised in that** a braking system (F) is mounted on at least one of said wheel hubs (R), as defined in any one of the preceding claims.

8. The vehicle, according to claim 7, **characterised in that** it is a truck, bus, van, conventional small or large passenger vehicle or motorcycle.

## Patentansprüche

1. Bremssystem für ein Fahrzeug, umfassend einen Rahmen (1), der an der starren Achse des Fahrzeugs (V) befestigt ist und von einer Trommel (2) überlagert wird, die mit der Radnabe (R) verbunden ist, wobei mindestens zwei mit Bremsbelägen (30) versehene Bremsbacken (3) an diametral gegenüberliegenden Rändern des Rahmens (1) angeordnet sind und sich mittels einer Antriebseinheit (4) auf die Innenfläche der Trommel (2) zu bewegen, **dadurch gekennzeichnet, dass** die Antriebseinheit (4) umfasst:
einen ersten Aktuator (5a), der benachbart zu einem Ende der Bremsbacken (3) angeordnet ist, und
einen zweiten Aktuator (5b), der benachbart zum gegenüberliegenden Ende der Bremsbacken (3) angeordnet ist,
wobei mindestens einer von diesen mit einer Aktuatoreinheit (9) des Fahrzeugs (V) gekoppelt ist,
**dadurch gekennzeichnet, dass** konzentrisch zu den jeweiligen Aktuatoren (5a, 5b) Träger (7a, 7b) vorgesehen sind, die über Stangen (8) an ihren Enden miteinander verbunden sind.

2. Bremssystem nach Anspruch 1, **dadurch gekennzeichnet, dass** die Bremsbacken (3) durch Rückstellelemente (10) miteinander verbunden sind.

3. Bremssystem nach Anspruch 1, **dadurch gekennzeichnet, dass** die Aktuatoren (5a, 5b) eine S-förmige oder elliptische Nockenkonfiguration aufweisen.

4. Bremssystem nach Anspruch 1, **dadurch gekennzeichnet, dass** die Bremsbacken (3) an ihren Enden mit Interaktionselementen (6) versehen sind, die mit den jeweiligen Aktuatoren (5a, 5b) in Kontakt stehen.

5. Bremssystem nach Anspruch 1, **dadurch gekennzeichnet, dass** die Interaktionselemente (6) als rollende oder gleitende Lager ausgebildet sind, die in Gleitkontakt mit den Oberflächen der Aktuatoren (5a, 5b) stehen.

6. Bremssystem nach Anspruch 1, **dadurch gekennzeichnet, dass** die Aktuatoreinheit (9) hydraulisch, elektrisch, pneumatisch oder als Kombination dieser Technologien ausgeführt ist.

7. Fahrzeug zum Transport von Lasten und/oder Personen, umfassend eine Hauptantriebseinheit (T) mit einem Verbrennungs-, Elektro- oder Hybridmotor als Energiequelle sowie ein Getriebe, das mit mindestens einer Achse gekoppelt ist, welche Energie und Leistung an mindestens eine Antriebseinheit mit einer Radnabe (R) überträgt, **dadurch gekennzeichnet, dass** an mindestens einer der Radnaben (R) ein Bremssystem (F) gemäß einem der vorhergehenden Ansprüche angeordnet ist.

8. Fahrzeug nach Anspruch 7, **dadurch gekennzeichnet, dass** es sich um einen Lastkraftwagen, Bus, Lieferwagen, herkömmlichen kleinen oder großen Personenwagen oder ein Motorrad handelt.

## Revendications

1. Système de freinage pour un véhicule, ledit système de freinage comprenant un châssis (1) fixé à l'essieu rigide du véhicule (V), et qui est superposé par un tambour (2), qui est relié au moyeu de roue (R), dans lequel au moins deux sabots (3) dotés de garnitures de frein (30) sont agencés au niveau de bords diamétralement opposés dudit châssis (1) et se déplacent en direction de la surface interne dudit tambour (2) au moyen d'un ensemble d'entraînement (4), dans lequel le système est **caractérisé par le fait que** ledit ensemble d'entraînement (4) comprend :
un premier actionneur (5a) positionné adjacent à une extrémité desdits sabots (3), et un second actionneur (5b) positionné adjacent à l'extrémité opposée desdits sabots (3), dont au moins un est accouplé à un ensemble actionneur (9) du véhicule (V) ; et
**caractérisé en ce qu'**il comprend des supports (7a, 7b) montés concentriquement avec les actionneurs respectifs (5a, 5b), lesdits supports (7a, 7b) étant reliés entre eux au moyen de tiges (8) agencées au niveau de leurs extrémités.

2. Système selon la revendication 1, **caractérisé en ce que** lesdits sabots (3) sont reliés entre eux au moyen d'éléments de retour (10).

3. Système selon la revendication 1, **caractérisé en ce que** lesdits actionneurs (5a, 5b) comprennent une configuration de came en « S » ou elliptique.

4. Système selon la revendication 1, **caractérisé en ce que** lesdits sabots (3) comprennent des éléments d'interaction (6) au niveau de leurs extrémités qui sont en contact avec les actionneurs respectifs (5a, 5b).

5. Système selon la revendication 1, **caractérisé en ce que** lesdits éléments d'interaction (6) sont des supports ou paliers roulants qui sont en contact coulissant sur la surface desdits actionneurs (5a, 5b).

6. Système selon la revendication 1, **caractérisé en ce que** ledit ensemble actionneur (9) est hydraulique, électrique, pneumatique ou une combinaison de ces technologies.

7. Véhicule de transport de charges et/ou de passagers qui comprend un ensemble d'entraînement principal (T) constitué d'un moteur à combustion, électrique ou même hybride comme source de puissance, une boîte de vitesses qui est reliée à au moins un essieu apte à transférer de l'énergie et de la puissance à au moins un ensemble d'entraînement avec un (R), ledit véhicule (V) étant **caractérisé en ce qu'**un système de freinage (F) est monté sur au moins un desdits moyeux de roue (R), tel que défini dans l'une quelconque des revendications précédentes.

8. Véhicule selon la revendication 7, **caractérisé en ce qu'**il s'agit d'un camion, d'un bus, d'une camionnette, d'un petit ou grand véhicule de tourisme conventionnel ou d'une moto.
